# EUROPÄISCHE PATENTANMELDUNG

(11) **EP 1 725 082 A2**
(43) Veröffentlichungstag der Anmeldung: **22.11.2006**
(21) Anmeldenummer: 06009371.3
(22) Anmeldetag: 05.05.2006
(51) Int. Cl.: H05B 41/04, H05B 41/02

(54) **Sockel für eine Lampe**

(30) Priorität: 19.05.2005 DE 102005023797
(71) Anmelder: Patent-Treuhand-Gesellschaft für elektrische Glühlampen mbH, 81543 München (DE)
(72) Erfinder: Schmidt-Lehmann, Thomas, 14532 Kleinmachnow (DE); Schneider, Heinz-Ingo, 85598 Baldham (DE)
(74) Vertreter: Raiser, Franz

(57) **Zusammenfassung**

Offenbart ist ein Sockel für eine Lampe, insbesondere für eine Hochdruckentladungslampe, mit einem Aufnahmeraum für elektronische Bauteile der Lampe und mit einer Kammer zur Aufnahme zumindest eines weiteren elektronischen Bauteils, beispielsweise eines Transformators, wobei in dem Sockel ein elektrisches Kontaktelement angeordnet ist, das über einen Verbindungsbereich einen Spannungsausgang des Transformators mit einer Stromzuführung der Lampe verbindet. Erfindungsgemäß ist der Verbindungsbereich mittels einer Kontaktabdeckung gegenüber dem Aufnahmeraum des Sockels elektrisch isoliert.

## Beschreibung

### Technisches Gebiet

Die Erfindung betrifft einen Sockel gemäß dem Oberbegriff des Patentanspruchs 1, eine mit einem derartigen Sockel versehene Lampe und ein Verfahren zur Herstellung einer derartigen Lampe gemäß dem Oberbegriff des Patentanspruchs 14.

### Stand der Technik

Der erfindungsgemäße Sockel kann prinzipiell bei einer Vielzahl einseitig gesockelter Lampen Verwendung finden. Das Hauptanwendungsgebiet des Sockels dürfte jedoch bei Hochdruckentladungslampen für Scheinwerfer, insbesondere für Fahrzeugscheinwerfer liegen, die von einem Außenkolben umgeben und einseitig in einen Sockel eingesetzt sind.

Eine Hochdruckentladungslampe mit einem derartigen Sockel ist beispielsweise aus der EP 1 511 130 A1 der Anmelderin bekannt. Bei diesen herkömmlichen Lampen findet ein Sockel mit einem darin angeordneten Zündtransformator zum Erzeugen der Zündspannung für die Entladungslampe Verwendung, in dem ein elektrisches Kontaktelement angeordnet ist, das einen Spannungsausgang des Zündtransformators mit einer sockeiseitig aus dem Entladungsgefäß der Lampe herausgeführten Stromzuführung verbindet. Bei dieser Lösung ist das Kontaktelement zur besseren elektrischen Isolierung abschnittsweise in den Sockel aus Kunststoff eingebettet. Der Sockel weist zwei Kammern auf, wobei sich ein erstes Ende des elektrischen Kontaktelements in die erste Kammer erstreckt und das zweite Ende des Kontaktelements von der zweiten Kammer aus zugänglich ist. Der Zündtransformator ist in der ersten Kammer angeordnet und sein Spannungsausgang mit dem ersten Ende des Kontaktelements verbunden, während in der zweiten Kammer weitere elektronische Komponenten der Zündvorrichtung der Entladungslampe untergebracht sind, die geringere Anforderungen an die Spannungsisolierung stellen als der Zündtransformator. Das zweite Ende des Kontaktelements ist von der zweiten Kammer aus zugänglich, um mit der sockelnah aus dem Entladungsgefäß herausgeführten Stromzuführung verbunden zu werden. Hierzu wird die Stromzuführung in eine Bohrung des zweiten Endes des Kontaktelements eingeführt und mit diesem verschweißt. Dadurch wird eine separate räumliche Anordnung des Hochspannung führenden Zündtransformators ermöglicht. Um die Hochspannungsfestigkeit des Lampensockels zu verbessern, wird bei dieser Lösung der in einer Vertiefung liegende Verbindungsbereich zwischen dem zweiten Ende des Kontaktelements und dem Ende der sockelnahen Stromzuführung in eine elektrisch isolierende Vergussmasse eingebettet, die eine elektrische Isolierung gegenüber dem Innenraum des Sockels ausbildet.

Nachteilig bei derartigen Lampen ist zum Einen, dass die Hochspannungsfestigkeit des Sockels vielfach den hohen Anforderungen an die Isolationssicherheit nicht genügt, da diese durch die Isolationswirkung der verwendeten Vergussmasse eingeschränkt und von deren Einbringung in den Verbindungsbereich des Kontaktelements mit der Stromzuführung abhängig ist. Des Weiteren ist nachteilig, dass derartige Lampen aufgrund der aufwändigen Füll- und Aushärtvorgänge der Vergussmasse in der Herstellung aufwändig und kostenintensiv sind.

### Darstellung der Erfindung

Der Erfindung liegt die Aufgabe zugrunde, einen Sockel für eine Lampe, insbesondere für eine Entladungslampe, eine mit einem derartigen Sockel ausgerüstete Lampe sowie ein Verfahren zur Herstellung einer derartigen Lampe zu schaffen, bei denen gegenüber herkömmlichen Lösungen eine verbesserte elektrische Isolierung bei minimalem vorrichtungstechnischem Aufwand ermöglicht ist.

Diese Aufgabe wird hinsichtlich des Sockels durch die Merkmalskombination des Anspruchs 1, hinsichtlich der Lampe durch die Merkmalskombination des Anspruchs 13 und hinsichtlich des Herstellungsverfahrens der Lampe durch die Merkmale des Anspruchs 14 gelöst. Besonders vorteilhafte Ausführungen der Erfindung sind in den abhängigen Ansprüchen beschrieben.

Der erfindungsgemäße Sockel für eine Lampe, insbesondere für eine Hochdruckentladungslampe, hat einen Aufnahmeraum für elektronische Bauteile der Lampe und eine Kammer zur Aufnahme zumindest eines weiteren elektronischen Bauelements, beispielsweise eines Transformators, wobei in dem Sockel ein elektrisches Kontaktelement angeordnet ist, das über einen Verbindungsbereich einen Spannungsausgang des Transformators mit einer Stromzuführung der Lampe verbindet. Erfindungsgemäß ist der Verbindungsbereich mittels einer Kontaktabdeckung gegenüber dem Aufnahmeraum des Sockels elektrisch isoliert.

Die erfindungsgemäße Lampe hat ein elektrisches Kontaktelement zum Verbinden eines Spannungsausgangs des Transformators mit einer Stromzuführung der Lampe, wobei der Verbindungsbereich des Kontaktelements mit der Stromzuführung mittels einer Kontaktabdeckung gegenüber dem Aufnahmeraum des Sockels elektrisch isoliert ist.

Ein erfindungsgemäßes Verfahren zur Herstellung einer Lampe, mit einem derartigen Sockel erfolgt mit den Schritten:
a) Einsetzen der Lampe in den Sockel
b) Verbinden des Kontaktelements mit der Stromzuführung der Lampe und
c) Einsetzen und Festlegen einer Kontaktabdeckung aus elektrisch isolierendem Material, insbesondere Kunststoff in eine Aufnahme des Sockels.

Diese Lösung ermöglicht eine verbesserte elektrische Isolierung des Sockels, da die Hochspannungsfestigkeit des Verbindungsbereichs durch die Auswahl des Materials und die geometrische Gestaltung der Kontaktabdeckung definiert einstellbar ist. Weiterhin verringert sich erfindungsgemäß der vorrichtungstechnische Aufwand bei der Herstellung des Sockels, da auf fertigungstechnisch aufwändige Füll- und Aushärtvorgänge, wie sie bei einer Lösung gemäß der EP 1 511 130 A1 erforderlich sind, verzichtet werden kann. Dadurch können die Herstellungskosten der Lampe gegenüber der eingangs genannten Lösung wesentlich verringert werden.

Gemäß einem besonders bevorzugten Ausführungsbeispiel ist die Kontaktabdeckung aus einem elektrisch isolierenden Material, insbesondere aus Kunststoff.

Als besonders vorteilhaft hat es sich erwiesen, wenn die Kontaktabdeckung eine Abdeckscheibe ist, die zumindest abschnittsweise in eine Aufnahme des Sockels eingesetzt und mit dieser stoffschlüssig verbunden ist. Die Abdeckscheibe ermöglicht eine einfache Bauteilgestaltung des Sockels, wobei sich die Herstellung des Sockels bei verringerten Herstellungskosten weiter vereinfacht.

Vorzugsweise hat die Kontaktabdeckung einen im Wesentlichen kreisförmigen Querschnitt. Aufgrund ihrer Formgebung ist die Kontaktabdeckung fertigungstechnisch einfach herstellbar.

Um das Einsetzen der Kontaktabdeckung in der Aufnahme des Sockels zu erleichtem und eine definierte Fügestelle zu ermöglichen, ist die Kontaktabdeckung vorzugsweise gestuft ausgeführt.

Die Kontaktabdeckung weist vorzugsweise eine Dicke t im Bereich von etwa 1 bis 3 mm, insbesondere von 1,6 mm auf.

Gemäß einer bevorzugten Ausführung der Erfindung ist die Kontaktabdeckung durch Schweißen, insbesondere durch Ultraschallschweißen mit dem Sockel verbunden.

Bei einer erfindungsgemäßen Variante ist die Kontaktabdeckung über eine Verbindungsmasse mit dem Sockel verbunden.

Als Verbindungsmasse findet vorzugsweise ein Klebstoff, insbesondere ein Ein-, Zwei- oder Mehrkomponentenklebstoff auf Epoxid-, Urethan-, Cyanacrylat- oder Silikonbasis Verwendung.

Vorzugsweise bildet die Kontaktabdeckung und der Sockel nach dem Verschweißen oder Verkleben eine gemeinsame Fläche aus. Aufgrund der bündig mit dem Sockel abschließenden Kontaktabdeckung wird der Bauraum für die elektrischen Komponenten der Lampe im Sockel nicht eingeschränkt.

Um die Hochspannungsfestigkeit und Isolationssicherheit des Sockels weiter zu verbessern, ist der Verbindungsbereich bei einem Ausführungsbeispiel der Erfindung zusätzlich zu der Kontaktabdeckung zumindest abschnittsweise in eine elektrisch isolierende Vergussmasse, insbesondere Silikon, eingebettet.

Vorzugsweise wird die Kontaktabdeckung nach oder während dem Einsetzen in den Sockel mit diesem verschweißt.

Bei einer alternativen Ausführung der Erfindung wird vor dem Einsetzen der Kontaktabdeckung eine Verbindungsmasse, insbesondere ein Klebstoff in den Verbindungsbereich eingebracht.

Gemäß einem weiteren Ausführungsbeispiel der Erfindung wird der Verbindungsbereich vor dem Einsetzen der Kontaktabdeckung in eine elektrisch isolierende Vergussmasse eingebettet, um die Hochspannungsfestigkeit und Isolationssicherheit des Sockels weiter zu verbessern.

### Kurze Beschreibung der Zeichnungen

Nachstehend wird die Erfindung anhand eines bevorzugten Ausführungsbeispiels näher erläutert. Es zeigen:
Figur 1 eine schematische Darstellung eines bevorzugten Ausführungsbeispiels des erfindungsgemäßen Sockels mit eingesetzter Entladungslampe;
Figur 2 eine schematische Darstellung der im Sockelinnenteil fixierten Entladungslampe aus Figur 1;
Figur 3 eine Draufsicht auf das Sockelaußenteil aus Figur 1 vor der Montage des Deckels;
Figur 4 eine Seitenansicht des Sockelaußenteils aus Figur 3 in teilweise geschnittener Darstellung;
Figur 5 eine Draufsicht auf das Sockelaußenteil aus Figur 3 mit eingesetzter Kontaktabdeckung;
Figur 6 eine Einzeldarstellung der Kontaktabdeckung aus Figur 5 und
Figur 7 eine Einzeldarstellung einer alternativen Ausführung einer Kontaktabdeckung.

### Bevorzugte Ausführung der Erfindung

Die Erfindung wird im Folgenden anhand einer einseitig gesockelten Entladungslampe für einen Fahrzeugscheinwerfer erläutert. Wie bereits eingangs erwähnt, ist der erfindungsgemäße Sockel jedoch keinesfalls auf derartige Lampentypen heschränkt.

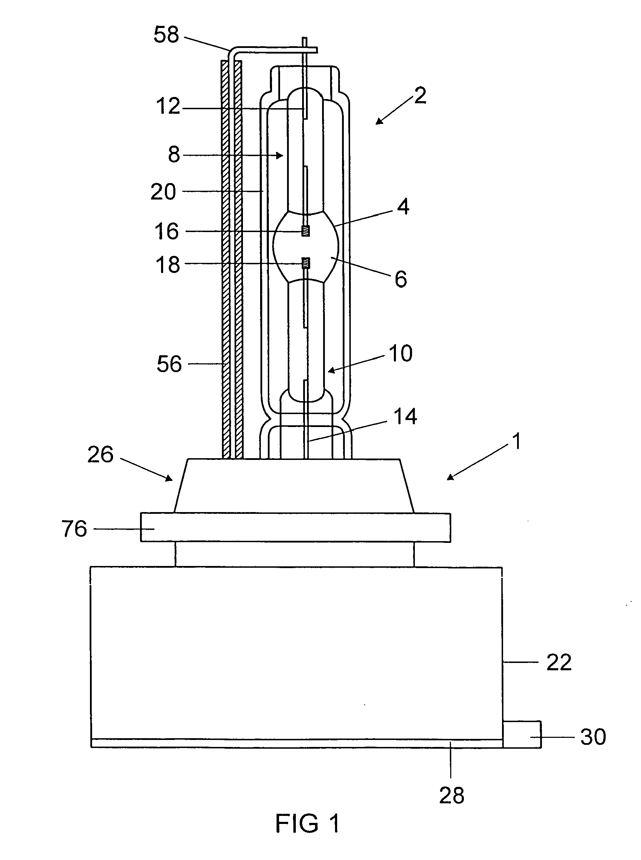

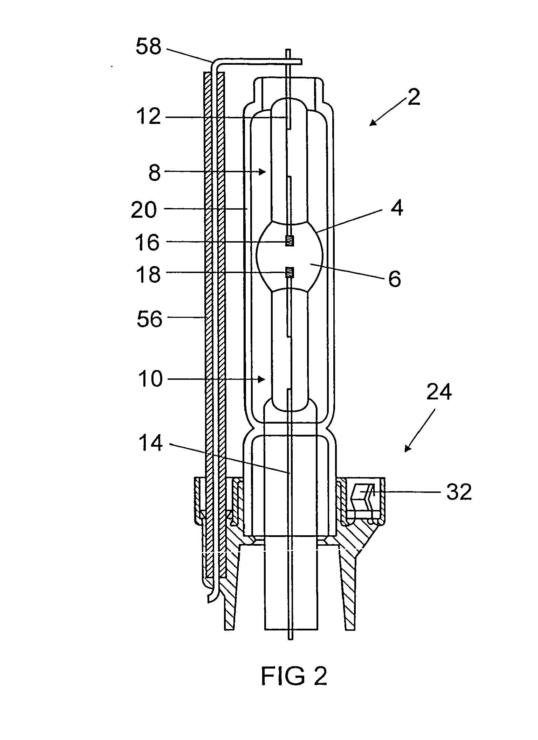

Figur 1 zeigt eine schematische Darstellung eines erfindungsgemäßen Sockels 1 mit einer in diesen eingesetzten Hochdruckentladungslampe 2. Diese besitzt ein Entladungsgefäß 4 aus Quarzglas mit einem Innenraum 6 und zwei diametral angeordneten, abgedichteten Endabschnitten 8, 10, die jeweils eine Stromzuführung 12, 14 aus Molybdän aufweisen. In den Innenraum 6 des Entladungsgefäßes 4 ragen zwei diametral angeordnete Elektroden 16, 18, die jeweils mit einer der Stromzuführungen 12, 14 verbunden sind und zwischen denen sich während des Lampenbetriebs eine Gasentladung ausbildet. In dem Innenraum 6 des Entladungsgefäßes 4 ist eine ionisierbare Füllung eingeschlossen, die aus hochreinem Xenongas und mehreren Metallhalogeniden besteht. Das Entladungsgefäß 4 ist von einem Außenkolben 20 umgeben, der aus Quarzglas besteht, das mit Ultraviolettstrahlung absorbierenden Dotierstoffen versehen ist. Der Sockel 1 besteht im Wesentlichen aus einem Sockelaußenteil 22 in das ein Sockelinnenteil 24 (siehe Figur 2) eingesetzt ist. Das Sockelaußenteil 22 ist als Kunststoffspritzgussteil ausgebildet und hat lampenseitig einen Aufnahmeabschnitt 26 zur Aufnahme des Sockelinnenteils 24. Der Sockel 1 kann über einen Deckel 28 bodenseitig verschlossen werden und hat eine Anschlussbuchse 30 zur elektrischen Kontaktierung.

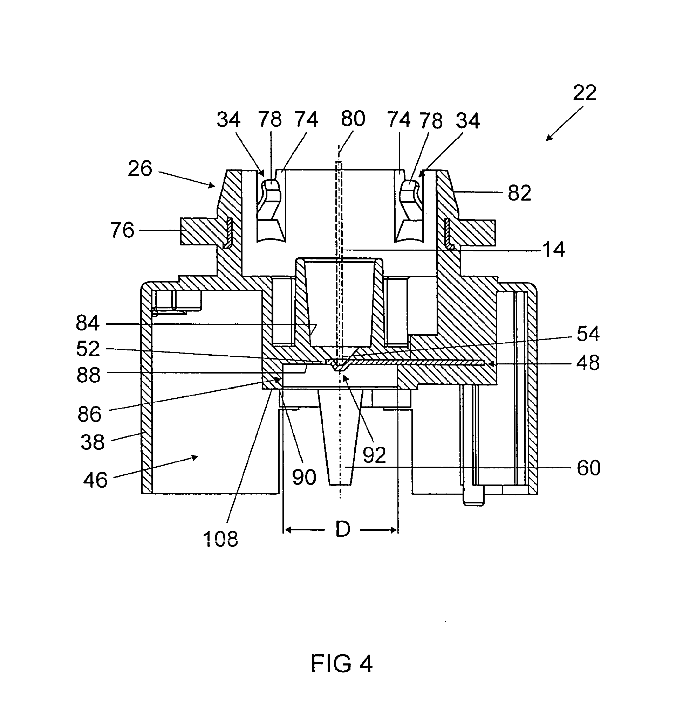

Gemäß Figur 2, die das Sockelinnenteil 24 des Sockels 1 aus Figur 1 mit eingesetzter Lampe 2 zeigt, sind das Entladungsgefäß 4 und der Außenkolben 20 in dem Sockelinnenteil 24 aus Kunststoff fixiert. Zur Montage des Sockelinnenteils 24 in dem Aufnahmeabschnitt 26 des Sockelaußenteils 22 (siehe Figur 1) ist das Sockelinnenteil 24 mit vier jeweils um 90° zueinander versetzt angeordneten, etwa keilförmigen Ausnehmungen 32 versehen (in Figur 2 ist lediglich eine der Ausnehmungen dargestellt), in die Befestigungsmittel 34 (siehe Figur 4) des Sockelaußenteils 22 eingreifen.

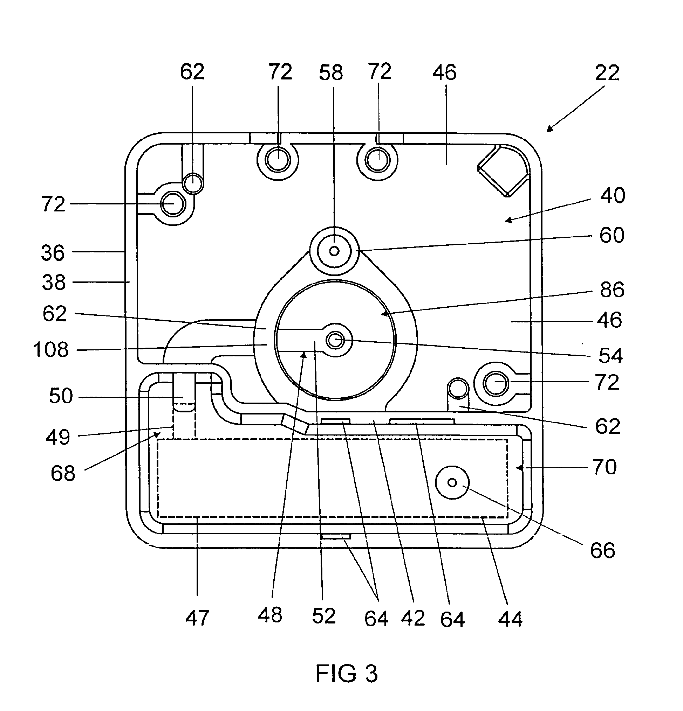

Wie Figur 3 zu entnehmen ist, die eine Draufsicht auf die von dem Entladungsgefäß 4 abgewandte Seite des Sockelaußenteils 22 aus Figur 1 vor der Montage des Deckels 28 zeigt, hat das Sockelaußenteil 22 einen im Wesentlichen quadratischen Grundkörper 36, der über eine Seitenwandung 38 einen Innenraum 40 begrenzt. Der Innenraum 40 ist durch eine Trennwand 42 in zwei unterschiedlich große Kammern 44, 46 unterteilt. In der ersten Kammer 44 (Transformatorraum) ist ein Stabkerntransformator 47 angeordnet (gestrichelt in Figur 3), der als Zündtransformator für die im Sockel 1 untergebrachte Impulszündvorrichtung (nicht dargestellt) der Hochdruckentladungslampe 2 dient. Die zweite Kammer 46 bildet einen Aufnahmeraum für weitere Komponenten (nicht dargestellt) der Impulszündvorrichtung aus. In dem Sockelaußenteil 22 ist ein etwa L-förmiges elektrisches Kontaktelement 48 aus Edelstahl eingebettet. Das Kontaktelement 48 wurde bereits bei der Herstellung des Sockelaußenteils 22 im Kuntstoffspritzgussverfahren durch Umspritzen in dieses integriert, so dass es abschnittsweise von dem Kunststoff des Sockelaußenteils 22 umgeben ist und lediglich zwei Enden 50, 52 des Kontaktelements 48 für die elektrische Kontaktierung zugänglich sind. Das erste Ende 50 des Kontaktelements 48 erstreckt sich in den Transformatorraum 44 und wird nach der Montage des Stabkerntransformators 47 mit einem Hochspannung führenden Zündspannungsausgang 49 des Stabkerntransformators 47 verbunden. Das zweite Ende 52 des Kontaktelements 48 ist abschnittsweise radial erweitert und mit einer Durchgangsbohrung 54 zur Aufnahme der inneren, sockelnahen Stromzuführung 14 der Entladungslampe 2 versehen (siehe Figur 1). Die Stromzuführung 12 des sockelfernen Endabschnittes 8 des Entladungsgefäßes 4 ist über eine von einer Isolierhülse 56 umgebenen Stromrückführung 58 (siehe Figur 1) durch einen Hohlsteg 60 des Sockelaußenteils 22 in den Aufnahmeraum 46 geführt und mit einer nicht dargestellten Montageplatine elektrisch verbunden, deren Form in etwa dem Querschnitt des Aufnahmeraumes 46 entspricht. Auf der Montageplatine sind beispielsweise der Zündkondensator der Impulszündvorrichtung und weitere elektronische Bauteile der Lampe angeordnet (nicht dargestellt). Die Montageplatine ist über Durchbrüche, in die Stege 62 des Sockelaußenteils 22 eingreifen in dem Aufnahmeraum 46 fixiert, wobei die Montageplatine derart in das Sockelaußenteil 22 eingesetzt ist, dass die auf der Montageplatine montierten Bauelemente in den Aufnahmeraum 22 des Sockelaußenteils hineinragen. In der Seitenwandung 38 des Transformatorraumes 44 und der Trennwand 42 sind drei Führungen 64 zur Aufnahme entsprechender Vorsprünge am Gehäuse des Stabkerntransformators 47 ausgebildet, so dass die Position des Stabkerntransformators 47 in dem Transformatorraum 44 festgelegt ist. Zusätzlich zu den Führungen 64 ist am Boden des Transformatorraumes 44 ein noppenförmiger Vorsprung 66 ausgebildet, der zusammen mit dem ersten Ende 50 des Kontaktelements 48 die Einbautiefe des Stabkerntransformators 47 in dem Transformatorraum 44 definiert. Der Stabkerntransformator 47 wird nach dem Einsetzen in den Transformatorraum 44 elektrisch isoliert und fixiert. Hierzu wird ein Zwischenraum 68 zwischen dem Stabkerntransformator 47 und den Seitenwänden 38 bzw. der Trennwand 42 des Transformatorraumes 44 mit einer elektrisch isolierenden Vergussmasse 70, beispielsweise Silikon ausgefüllt. Zur Befestigung des Deckels 22 (siehe Figur 1) sind vier stegförmige Befestigungselemente 72 an dem Sockelaußenteil 22 ausgebildet.

Gemäß Figur 4, die eine Seitenansicht des Sockelaußenteils 22 aus Figur 3 in teilweise geschnittener Darstellung zeigt, ist der Aufnahmeabschnitt 26 des Sockelaußenteils 22 von vier um 90° zueinander versetzt angeordneten etwa U-förmigen Ausnehmungen 74 unterbrochen, die sich stirnseitig bis etwa auf die Höhe eines zumindest abschnittsweise ringförmigen Flansches 76 erstrecken. In den Ausnehmungen 74 des Aufnahmeabschnitts 26 ist jeweils ein als Federlasche 78 ausgebildetes Befestigungsmittel 34 als Halteelement angeordnet, das sich im Wesentlichen achsparallel zu einer Längsachse 80 des Sockelaußenteils 22 erstreckt. Über die Halteemente 78 ist das Sockelinnenteil 24 (siehe Figur 2) in dem Sockelaußenteil 22 fixierbar. Der Aufnahmeabschnitt 26 geht lampenseitig in einen Einführkegel 82 zum Einsetzen des Sockels 1 in den Scheinwerfer (nicht dargestellt) über.

Zur Montage des Sockelinnenteils 24 im Sockelaußenteil 22 wird die sockelnahe Stromzuführung 14 (mit gestrichelter Linie angedeutet) der Entladungslampe 2 über einen stufenförmig konisch verengten Tubus 84 des Sockelaußenteils 22 in die sich unmittelbar anschließende, als geprägte Warzung ausgebildete Durchgangsbohrung 54 des zweiten Endes 52 des Kontaktelements 48 eingeführt. Die konische Verengung des Tubus 84 erleichtert hierbei das Einführen der Stromzuführung 14 in die Durchgangsbohrung 54 des Kontaktelements 48. Auf der von dem Tubus 84 abgewandten Seite des Kontaktelements 48 ist das durch die Durchgangsbohrung 54 hindurchgefädelte Ende der Stromzuführung 14 mit dem zweiten Ende 52 des Kontaktelements 48 mittels Laserstrahlschweißen verschweißt. In dem Sockelaußenteil 22 ist auf der von dem Tubus 84 entfernten Seite des Kontaktelements 48 eine im Wesentlichen sacklochförmige Aufnahme 86 ausgebildet, wobei das zweite Ende 52 des Kontaktelements 48 einen Teil einer Bodenwandung 88 der Aufnahme 86 ausbildet. Die Aufnahme 86 ist an einer Stirnseite mit einer umlaufenden Fase 90 versehen.

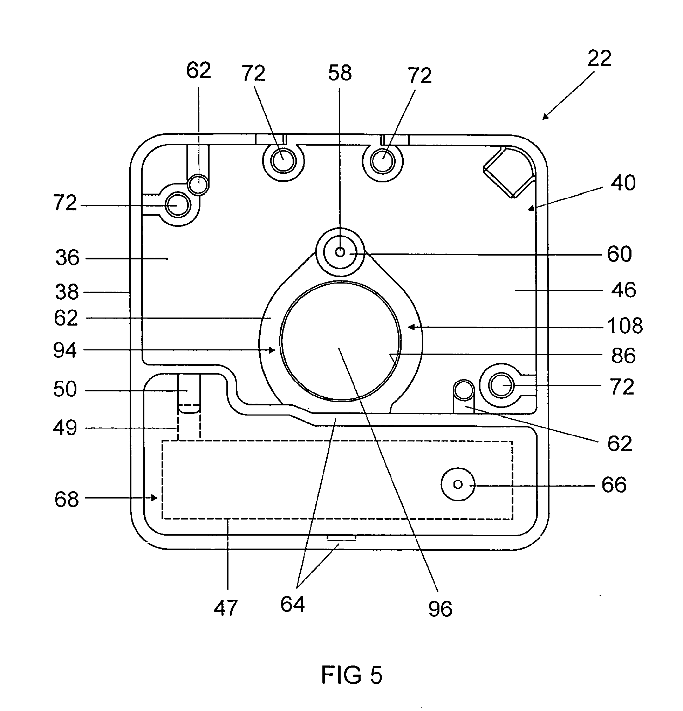

Erfindungsgemäß wird ein Verbindungsbereich 92 des Kontaktelements 48 mit der sockelnahen Stromzuführung 14 mittels einer Kontaktabdeckung 94 gegenüber dem Aufnahmeraum 46 des Sockels 1 elektrisch isoliert. Dies wird im Folgenden anhand Figur 5 näher erläutert.

Wie Figur 5 zu entnehmen ist, die das Sockelaußenteil 22 aus Figur 3 mit verschlossenem Verbindungsbereich 92 zeigt, wird die Aufnahme 86 des Sockelaußenteils 22 nach dem Verschweißen der sockelnahen Stromzuführung 14 mit dem zweiten Ende 52 des Kontaktelements 48 (siehe Figur 4) über die Kontaktabdeckung 94 verschlossen. Diese Lösung ermöglicht eine verbesserte elektrische Isolierung des Sockels 1, da die Hochspannungsfestigkeit des Verbindungsbereichs 92 (siehe Figur 4) durch die Auswahl des Materials und die geometrische Gestaltung der isolierenden Kontaktabdeckung 94 definiert einstellbar ist. Weiterhin verringert sich erfindungsgemäß der vorrichtungstechnische Aufwand bei der Herstellung des Sockels 1, da auf fertigungstechnisch aufwändige Füll- und Aushärtvorgänge, wie sie bei einer Lösung gemäß der EP 1 511 130 A1 erforderlich sind, verzichtet werden kann. Dadurch können die Herstellungskosten der Lampe gegenüber der eingangs genannten Lösung wesentlich verringert werden.

Bei dem gezeigten Ausführungsbeispiel findet als Kontaktabdeckung 94 eine Abdeckscheibe 96 Verwendung, die in die Aufnahme 86 des Sockels 1 eingesetzt und mit dieser stoffschlüssig durch Ultraschallschweißen verbunden ist. Hierzu wird der Sockel 1 in eine Schweißaufnahme eingespannt, die Kontaktabdeckung 94 in die Aufnahme 86 des Sockelaußenteils 22 teilweise eingesetzt und über eine Sonotrode (nicht dargestellt) in hochfrequente Schwingungen versetzt. Gleichzeitig wird die Kontaktabdeckung 94 über die Sonotrode in Richtung des feststehenden Sockelaußenteils 22 bewegt, wobei die Kunststoffe aufgrund der Reibung an den Kontaktstellen stark erhitzt werden, so dass es zu einem Erweichen der Kunststoffe und einer stoffschlüssigen Verbindung der Kontaktabdeckung 94 mit der Aufnahme 86 des Sockelaußenteils 22 kommt.

In einem zusätzlichen Arbeitsschritt kann der Verbindungsbereich 92 vor dem Einbringen der Kontaktabdeckung 94 zumindest abschnittsweise in eine elektrisch isolierende Vergussmasse 98 eingebettet werden (nicht dargestellt). Dadurch kann die Hochspannungsfestigkeit und Isolationssicherheit im Verbindungsbereich 92 weiter erhöht werden.

Alternativ zu dem vorbeschriebenen Fügen der Kontaktabdeckung 94 mittels einer Schweißtechnik ist es möglich, die Kontaktabdeckung 94 über eine Verbindungsmasse (nicht dargestellt) mit dem Sockelaußenteil 22 zu verbinden. Als Verbindungsmasse kann beispielsweise ein Ein-, oder Mehrkomponentenklebstoff auf Epoxid-, Urethan-, Cyanacrylat- oder Silikonbasis eingesetzt werden.

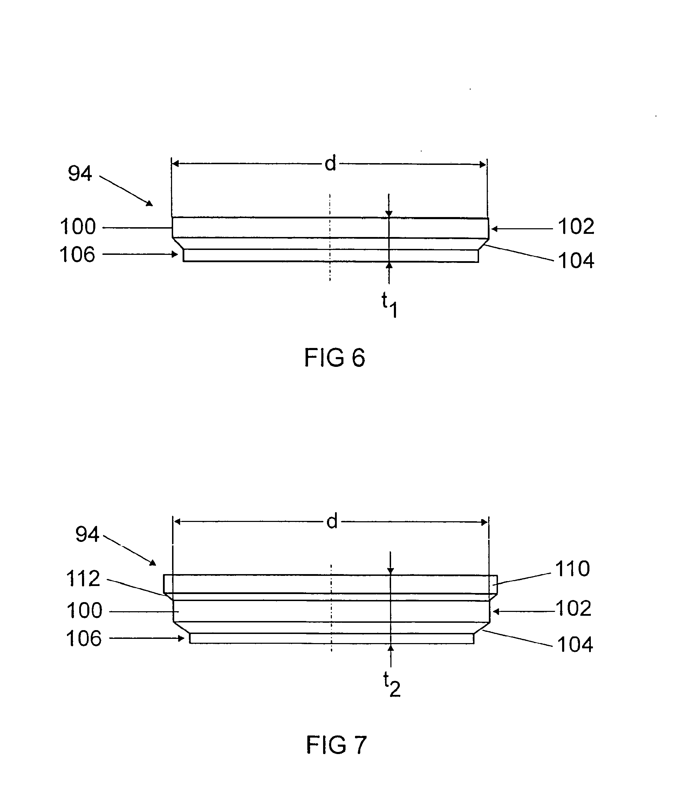

Gemäß Figur 6, die eine Einzeldarstellung der Kontaktabdeckung 94 aus Figur 5 zeigt, hat diese einen im Wesentlichen zylinderförmigen Grundkörper 100, der einen Radialbund 102 aufweist, der über eine umlaufende Fase 104 in einen Einführabschnitt 106 mit verringertem Durchmesser übergeht, um das Einsetzen der Kontaktabdeckung 94 in die Aufnahme 86 des Sockelaußenteils 22 zu erleichtern (siehe Figur 4). Die Kontaktabdeckung 94 hat eine Dicke t₁ von 1,6 mm und besteht aus einem elektrisch isolierenden, thermoplastischen Kunststoff. Die Verbindung zwischen Sockelaußenteil 22 und Kontaktabdeckung 94 kann durch die Verwendung gleichartiger Kunststoffen weiter verbessert werden. Der Radialbund 102 hat, bezogen auf einen Innendurchmesser D (siehe Figur 4) der Aufnahme 86 des Sockelaußenteils 22, einen größeren Außendurchmesser d. Aufgrund des Durchmesserunterschiedes liegt die Kontaktabdeckung 94 vor dem Verschweißen mit dem Sockelaußenteil 22 im Bereich der Fase 104 an einer Sockeloberfläche 108 der Aufnahme 86 an (siehe Figur 5).

Während des Schweißvorgangs wird die Kontaktabdeckung 94 aufgrund der Temperaturentwicklung teilweise plastifiziert und mittels des anliegenden Schweißdruckes der Sonotrode in die Aufnahme 86 eingequetscht und stoffschlüssig mit dieser verbunden. Nach dem Verschweißen kann die Kontaktabdeckung 94 einen über die Wahl der Schweißparameter einstellbaren Überstand aufweisen oder bündig mit der Sockeloberfläche 108 abschließen.

Bei einem alternativen Fügeverfahren kann die Kontaktabdeckung 94 glatt, d.h. ohne Radialbund 102 und mit einem Außendurchmesser d, der dem Innendurchmesser D der Aufnahme des Sockelaußenteils 22 entspricht oder geringfügig kleiner gewählt ist, ausgeführt werden. Dadurch ist es möglich, die Kontaktabdeckung 94 in die Aufnahme 86 einzusetzen und mit dieser zu verschweißen, bzw. die Kontaktabdeckung 94 oder die Aufnahme 86 mit Klebstoff zu versehen und die Kontaktabdeckung 94 in die Aufnahme 86 einzukleben.

Figur 7 zeigt eine alternative Ausführung einer erfindungsgemäßen Kontaktabdeckung 94, die sich von der Kontaktabdeckung gemäß Figur 6 lediglich durch einen zusätzlichen Radialbund 110 unterscheidet, der über eine umlaufende Fase 112 in den Radialbund 102 mit verringertem Durchmesser d übergeht. Der zusätzliche Radialbund 110 liegt nach dem Einschweißen der Kontaktabdeckung 94 in die Aufnahme 86 auf der Sockeloberfläche 108 (siehe Figur 3) auf. Dadurch wird der beim Schweißen entstehende Schweißgrat von dem Radialbund 110 verdeckt und eine definierte Eintauchtiefe der Kontaktabdeckung 94 in der Aufnahme 86 erreicht. Die Kontaktabdeckung 94 hat bei diesem Ausführungsbeispiel eine Dicke t₂ von ca. 2,4 mm und besteht ebenfalls aus einem elektrisch isolierenden, thermoplastischen Kunststoff.

Anhand der Figuren 1 bis 5 werden im Folgenden die wesentlichen Schritte der Herstellung einer erfindungsgemäßen Lampe erläutert. In einem ersten Arbeitsgang wird die von dem Außenkolben 20 umgebene Entladungslampe 2 mit dem Sockelinnenteil 24 in das Sockelaußenteil 22 eingesetzt und das zweite Ende 52 des Kontaktelements 48 mit der sockelnahen Stromzuführung 14 (siehe Figur 4) der Entladungslampe 2 verschweißt. Anschließend wird gemäß Figur 5 die Kontaktabdeckung 94 in die Aufnahme 86 des Sockelaußenteils 22 zumindest teilweise eingesetzt. In einem zusätzlichen Arbeitsschritt kann der Verbindungsbereich 92 vor dem Einsetzen der Kontaktabdeckung 94 in eine elektrisch isolierende Vergussmasse 98 eingebettet werden. Nach dem Einsetzen der Kontaktabdeckung 94 in den Sockel 1 wird diese beispielsweise mittels Ultraschallschweißen mit der Aufnahme 86 verschweißt. Bei einem alternativen Ausführungsbeispiel der Erfindung wird vor dem Einsetzen der Kontaktabdeckung 94 ein Klebstoff in den Verbindungsbereich eingebracht und die Kontaktabdeckung 94 über eine Klebeverbindung in der Aufnahme 86 fixiert.

Der erfindungsgemäße Sockel 1 ist nicht auf die beschriebene Fügetechnik mittels Ultraschallschweißen beschränkt, vielmehr kann jedes aus dem Stand der Technik bekannte Schweißverfahren Verwendung finden, das eine definierte Wärmeeinbringung in den Schweißbereich ermöglicht. Insbesondere können andere Reibschweißverfahren bzw. Heizelement-, Laser- oder Infrarotlichtschweißverfahren eingesetzt werden. Weiterhin ist es möglich, die Aufnahme 86 mit einer gestuften Kontur auszubilden, um die Schweißbarkeit zu verbessern. Bei diesem Ausführungsbeispiel kann auf eine stufenförmige Ausbildung der Kontaktabdeckung verzichtet werden. Erfindungswesentlich ist eine stoffschlüssige, dichte Verbindung der Kontaktabdeckung 94 mit dem Sockel 1, so dass eine hochspannungsfeste Isolation des Verbindungsbereichs 92 erreicht wird.

Offenbart ist ein Sockel 1 für eine Lampe 2, insbesondere für eine Hochdruckentladungslampe, mit einem Aufnahmeraum 46 für elektronische Bauteile der Lampe 2 und mit einer Kammer 44 zur Aufnahme zumindest eines weiteren elektronischen Bauteils, beispielsweise eines Transformators 47, wobei in dem Sockel 1 ein elektrisches Kontaktelement 48 zum Verbinden eines Spannungsausgangs des Transformators 47 mit einer Stromzuführung 14 der Lampe 2 angeordnet ist. Erfindungsgemäß ist der Verbindungsbereich 92 des Kontaktelements 48 mittels einer Kontaktabdeckung 94 gegenüber dem Aufnahmeraum 46 des Sockels 1 elektrisch isoliert.

## Patentansprüche

1. Sockel für eine Lampe (2), insbesondere für eine Hochdruckentladungslampe, mit einem Aufnahmeraum (46) für elektronische Bauteile der Lampe (2), und mit einer Kammer (44) zur Aufnahme zumindest eines weiteren elektronischen Bauelements (47), beispielsweise eines Transformators, wobei in dem Sockel (1) ein elektrisches Kontaktelement (48) angeordnet ist, das über einen Verbindungsbereich (92) einen Spannungsausgang (49) des Transformators (47) mit einer Stromzuführung (14) der Lampe (2) verbindet, **dadurch gekennzeichnet, dass** der Verbindungsbereich (92) mittels einer Kontaktabdeckung (94) gegenüber dem Aufnahmeraum (46) des Sockels (1) elektrisch isoliert ist.

2. Sockel nach Anspruch 1, wobei die Kontaktabdeckung (94) aus einem elektrisch isolierenden Material, vorzugsweise einem Kunststoff ist.

3. Sockel nach Anspruch 1 oder 2, wobei die Kontaktabdeckung (94) einen im Wesentlichen kreisförmigen Querschnitt aufweist.

4. Sockel nach einem der vorhergehenden Ansprüche, wobei die Kontaktabdeckung (94) eine Abdeckscheibe (96) ist, die zumindest abschnittsweise in eine Aufnahme (86) des Sockels (1) eingesetzt ist.

5. Sockel nach Anspruch 4, wobei die Kontaktabdeckung (94) gestuft ausgeführt ist.

6. Sockel nach einem der vorhergehenden Ansprüche, wobei die Kontaktabdeckung (94) eine Dicke (t₁, t₂) im Bereich von etwa 1 bis 3 mm, vorzugsweise von 1,6 mm aufweist.

7. Sockel nach einem der vorhergehenden Ansprüche, wobei die Kontaktabdeckung (94) durch Schweißen, vorzugsweise durch Ultraschallschweißen mit dem Sockel verbunden ist.

8. Sockel nach einem der Ansprüche 1 bis 6, wobei die Kontaktabdeckung (94) über eine Verbindungsmasse mit dem Sockel (1) verbunden ist.

9. Sockel nach Anspruch 8, wobei die Verbindungsmasse ein Klebstoff, insbesondere ein Ein-, oder Mehrkomponentenklebstoff ist.

10. Sockel nach Anspruch 9, wobei der Klebstoff eine Epoxid-, Urethan-, Cyanacrylat- oder Silikonbasis aufweist.

11. Sockel nach einem der Ansprüche 7 bis 10, wobei die Kontaktabdeckung (94) und der Sockel (1) nach dem Verschweißen oder Verkleben eine gemeinsame Fläche ausbilden.

12. Sockel nach einem der vorhergehenden Ansprüche, wobei der Verbindungsbereich (92) zumindest abschnittsweise in eine elektrisch isolierende Vergussmasse (98), insbesondere Silikon, eingebettet ist.

13. Lampe mit einem Sockel (1) nach einem der vorhergehenden Ansprüche.

14. Verfahren zur Herstellung einer Lampe, mit einem Sockel (1), insbesondere gemäß einem der Ansprüche 1 bis 12, wobei in dem Sockel (1) ein elektrisches Kontaktelement (48) angeordnet ist, das über einen Verbindungsbereich (92) einen Spannungsausgang (49) eines Transformators (47) mit einer Stromzuführung (14) der Lampe (2) verbindet, mit den Schritten:
a) Einsetzen der Lampe (2) in den Sockel (1)
b) Verbinden des Kontaktelements (48) mit der Stromzuführung (14) der Lampe (2) und
c) Einsetzen und Festlegen einer Kontaktabdeckung (94) aus elektrisch isolierendem Material, insbesondere Kunststoff in eine Aufnahme (86) des Sockels (1)

15. Verfahren zur Herstellung einer Lampe nach Anspruch 14, wobei der Verbindungsbereich (92) vor dem Einsetzen der Kontaktabdeckung (94) in eine elektrisch isolierende Vergussmasse (98) eingebettet wird.

16. Verfahren zur Herstellung einer Lampe nach Anspruch 14 oder 15, wobei die Kontaktabdeckung (94) nach oder während dem Einsetzen in den Sockel (1) mit diesem verschweißt wird.

17. Verfahren zur Herstellung einer Lampe nach Anspruch 14 oder 15, wobei vor dem Einsetzen der Kontaktabdeckung (94) eine Verbindungsmasse (98), insbesondere ein Klebstoff in den Verbindungsbereich eingebracht wird.
